# EUROPEAN PATENT APPLICATION

(11) **EP 4 793 099 A1**
(43) Date of publication of application: **19.08.2026**
(21) Application number: 24876022.5
(22) Date of filing: 22.05.2024
(51) Int. Cl.: B60R 1/12, B60R 1/074, B60R 1/06, B60R 1/02

(54) **REARVIEW MIRROR MONITORING METHOD AND APPARATUS, AND INTELLIGENT DRIVING DEVICE**

(30) Priority: 13.10.2023 CN 202311340665
(71) Applicant: Yinwang Intelligent Technologies Co., Ltd., Shenzhen, Guangdong 518110 (CN)
(72) Inventor: QIN, Cai, Shenzhen, Guangdong 518129 (CN); ZHU, Xiaoning, Shenzhen, Guangdong 518129 (CN); YU, Hao, Shenzhen, Guangdong 518129 (CN); ZHANG, Xiaohua, Shenzhen, Guangdong 518129 (CN)
(74) Representative: MERH-IP Matias Erny Reichl Hoffmann Patentanwälte PartG mbB
(86) International application number: PCT/CN2024/094635
(87) International publication number: WO 2025/077195

(57) **Abstract**

A rearview mirror monitoring method and apparatus, and an intelligent driving device are disclosed. The method includes: obtaining an image captured by an image shooting apparatus (222), where the image indicates a first vehicle body feature on a first side of a vehicle, and the image shooting apparatus is disposed at a rearview mirror (221) on the first side of the vehicle; and determining an actual pose of the rearview mirror based on the first vehicle body feature. When the actual pose of the rearview mirror does not match a target pose, at least one of the following is performed: adjusting a pose of the rearview mirror, indicating that the pose of the rearview mirror is abnormal, or controlling the vehicle to suspend traveling or parking. This application can be applied to intelligent vehicles such as an electric vehicle or a new energy vehicle, and can monitor a real-time pose and a pose change of a rearview mirror, thereby helping reduce a risk of scraping the rearview mirror or a vehicle body.

## Description

This application claims priority to Chinese Patent Application No. 202311340665.2, filed with the China National Intellectual Property Administration on October 13, 2023 and entitled "REARVIEW MIRROR MONITORING METHOD AND APPARATUS, AND INTELLIGENT DRIVING DEVICE", which is incorporated herein by reference in its entirety.

### TECHNICAL FIELD

This application relates to the vehicle control field, and more specifically, to a rearview mirror monitoring method and apparatus, and an intelligent driving device.

### BACKGROUND

With development of vehicles toward automation and intelligence, a folding angle of a rearview mirror of a vehicle can be automatically controlled. However, because a sensor that can detect a folding position of the rearview mirror is not disposed at the rearview mirror, a control system of the vehicle cannot determine the folding position of the rearview mirror. In this case, if the rearview mirror is faulty or manually adjusted, the folding angle of the rearview mirror may not reach a preset angle, leading to scraping of the rearview mirror.

In view of this, a monitoring scheme that can be used for monitoring a status of the rearview mirror needs to be developed urgently.

### SUMMARY

This application provides a rearview mirror monitoring method and apparatus, and an intelligent driving device, so that an actual pose of a rearview mirror can be monitored when a sensor for a folding position is not disposed at the rearview mirror.

According to a first aspect, a rearview mirror monitoring method is provided. The method may be performed by an intelligent driving device, for example, performed by a computing platform in the intelligent driving device, or performed by a chip or a processor in the intelligent driving device. The intelligent driving device may be a vehicle.

The method includes: obtaining an image captured by a first image shooting apparatus, where the image indicates a first vehicle body feature on a first side of a vehicle, and the first image shooting apparatus is disposed at a rearview mirror on the first side of the vehicle; and determining an actual pose of the rearview mirror based on the first vehicle body feature.

In the foregoing technical solution, a pose and a pose change of the rearview mirror can be monitored in real time based on the feature indicated by the image obtained by the image shooting apparatus disposed at the rearview mirror, which helps reduce a risk of scraping the rearview mirror or the vehicle body.

With reference to the first aspect, in some implementations of the first aspect, the method further includes: when the first vehicle body feature does not match a second vehicle body feature, determining that a pose of the rearview mirror is abnormal, where the second vehicle body feature is a vehicle body feature that is on the first side and that corresponds to a target pose of the rearview mirror, and the target pose is a pose that is of the rearview mirror and that is indicated by a vehicle control instruction, or the target pose is a pose that is of the rearview mirror and that is determined based on one or more of an operating status of the vehicle, a target parking area, and a width of a planned path.

If the pose of the rearview mirror may be automatically adjusted by a controller, when the rearview mirror does not reach the target pose indicated by a vehicle control instruction of a controller, or after the rearview mirror is adjusted to the target pose in response to a vehicle control instruction, when the rearview mirror is manually folded to a pose that deviates from the target pose, it may be determined that the pose of the rearview mirror is abnormal. If the pose of the rearview mirror cannot be automatically adjusted, but it is determined, based on an operating scenario of the vehicle (such as the operating status, a target parking area, or a width of a planned path), that the pose of the rearview mirror needs to be adjusted to the target pose, and an actual pose of the rearview mirror does not match the target pose, it may also be determined that the pose of the rearview mirror is abnormal.

The foregoing technical solution helps improve an intelligence degree of the vehicle, thereby improving user experience.

With reference to the first aspect, in some implementations of the first aspect, the method further includes: when the actual pose does not match a target pose, determining that a pose of the rearview mirror is abnormal, where the target pose is a pose that is of the rearview mirror and that is indicated by a vehicle control instruction, or the target pose is a pose that is of the rearview mirror and that is determined based on one or more of an operating status of the vehicle, a target parking area, and a width of a planned path.

With reference to the first aspect, in some implementations of the first aspect, the method further includes: when the pose of the rearview mirror is abnormal, adjusting the pose of the rearview mirror and/or controlling a prompt apparatus to indicate that the pose of the rearview mirror is abnormal.

In the foregoing technical solution, when the pose of the rearview mirror is abnormal, adjusting the rearview mirror helps improve vehicle safety and/or driving and riding experience. For example, if the rearview mirror should be in a folded state but the rearview mirror is actually in an unfolded state, adjusting the pose of the rearview mirror helps reduce a risk of scraping the rearview mirror, thereby improving vehicle safety. For another example, during traveling of the vehicle, if the rearview mirror should be in an unfolded state that facilitates observation of a trailing vehicle, but the rearview mirror is actually in a pose that does not facilitate observation of the trailing vehicle, adjusting the pose of the rearview mirror helps a driver observe the trailing vehicle, thereby improving driving safety and driving and riding experience of the user. The user is notified that the pose of the rearview mirror is abnormal, so that the user can take measures in a timely manner (for example, adjust the rearview mirror, suspend traveling, or park the vehicle), thereby reducing impact of the abnormal pose of the rearview mirror on vehicle safety or driving and riding experience.

With reference to the first aspect, in some implementations of the first aspect, adjusting the pose of the rearview mirror includes: adjusting the pose of the rearview mirror to a first pose when the vehicle travels toward a first parking space or when a width of a first planned path of the vehicle is less than or equal to a first width threshold, where a width of the first parking space is less than or equal to a second width threshold, and the first planned path is within a first range of the vehicle; or adjusting the pose of the rearview mirror to a second pose when the vehicle travels toward a second parking space or when a width of a second planned path of the vehicle is greater than the first width threshold, where a width of the second parking space is greater than the second width threshold, and the second planned path is within a second range of the vehicle, where an overall width that is of the vehicle and that corresponds to the first pose is less than an overall width that is of the vehicle and that corresponds to the second pose.

In the foregoing technical solution, when the vehicle needs to pass through a narrow path or park in a narrow parking space, controlling the rearview mirror to be close to the vehicle body helps reduce the risk of scraping the rearview mirror. When the vehicle travels on a wide road or parks in a wide parking space, the rearview mirror is controlled to be unfolded to a proper pose. This helps observe a position of an obstacle during traveling or parking, and can reduce a risk of collision between the vehicle body and the obstacle.

With reference to the first aspect, in some implementations of the first aspect, the method further includes: determining a folding angle of the rearview mirror based on the first vehicle body feature and the second vehicle body feature; and adjusting the pose of the rearview mirror includes: adjusting the pose of the rearview mirror based on the folding angle.

In some implementations, the pose of the rearview mirror is adjusted from a current pose to the first pose or the second pose based on the folding angle.

When the rearview mirror is manually folded to a pose, or the rearview mirror is stuck to a pose due to a sudden fault in a process in which the rearview mirror is adjusted to the target pose in response to the vehicle control instruction, in the foregoing technical solution, the rearview mirror can be adjusted to a proper pose (for example, the target pose) without restoring the rearview mirror to an initial pose. This helps improve user experience.

With reference to the first aspect, in some implementations of the first aspect, the method further includes: controlling the prompt apparatus to indicate that the pose of the rearview mirror is to be adjusted.

In the foregoing technical solution, before the rearview mirror is adjusted, the user is prompted to adjust the rearview mirror, to avoid a sudden adjustment of the rearview mirror when the user is not ready, thereby helping improve driving and riding experience of the user.

With reference to the first aspect, in some implementations of the first aspect, when the pose of the rearview mirror is abnormal, the method further includes: when the vehicle travels toward a third parking space or when a width of a third planned path of the vehicle is less than or equal to a third width threshold, indicating to adjust the rearview mirror to a third pose, where a width of the third parking space is less than or equal to a fourth width threshold, and the third planned path is within a third range of the vehicle; or when the vehicle travels toward a fourth parking space or when a width of a fourth planned path of the vehicle is greater than the third width threshold, indicating to adjust the rearview mirror to a fourth pose, where a width of the fourth parking space is greater than the fourth width threshold, and the fourth planned path is within a fourth range of the vehicle, where an overall width that is of the vehicle and that corresponds to the third pose is less than an overall width that is of the vehicle and that corresponds to the fourth pose.

In the foregoing technical solution, in a case in which the vehicle cannot automatically adjust the pose of the rearview mirror, when the vehicle needs to pass through a narrow path or park in a narrow parking space, the user may be prompted to adjust the rearview mirror to a pose close to the vehicle body. This helps reduce the risk of scraping the rearview mirror. When the vehicle travels on a wide road or parks in a wide parking space, the user may be prompted to unfold the rearview mirror to a proper pose. This helps observe a position of an obstacle during traveling or parking, and can reduce a risk of collision between the vehicle body and the obstacle.

With reference to the first aspect, in some implementations of the first aspect, the method further includes: when the pose of the rearview mirror is abnormal, controlling the vehicle to suspend traveling or parking.

In the foregoing technical solution, when the pose of the rearview mirror is abnormal, the vehicle is controlled to enter a pause state, to avoid a danger caused when the vehicle operates in a state in which the pose of the rearview mirror is abnormal.

With reference to the first aspect, in some implementations of the first aspect, the first vehicle body feature indicates any one of the following: a proportion and/or a position of a vehicle body image on the first side in the image; or a position and/or a shape of a part or all of a contour line of a vehicle body image on the first side.

In the foregoing technical solution, the first vehicle body feature is irrelevant to a traveling speed of the vehicle. Therefore, accuracy of a status monitoring result of the rearview mirror is not affected by the speed of the vehicle.

With reference to the first aspect, in some implementations of the first aspect, the first vehicle body feature is associated with an extrinsic parameter of the first image shooting apparatus.

According to a second aspect, a rearview mirror monitoring apparatus is provided. The apparatus includes: an obtaining unit, configured to obtain an image captured by a first image shooting apparatus, where the image indicates a first vehicle body feature on a first side of a vehicle, and the first image shooting apparatus is disposed at a rearview mirror on the first side of the vehicle; and a processing unit, configured to determine an actual pose of the rearview mirror based on the first vehicle body feature.

With reference to the second aspect, in some implementations of the second aspect, the processing unit is further configured to: when the first vehicle body feature does not match a second vehicle body feature, determine that a pose of the rearview mirror is abnormal, where the second vehicle body feature is a vehicle body feature that is on the first side and that corresponds to a target pose of the rearview mirror, and the target pose is a pose that is of the rearview mirror and that is indicated by a vehicle control instruction, or the target pose is a pose that is of the rearview mirror and that is determined based on one or more of an operating status of the vehicle, a target parking area, and a width of a planned path.

With reference to the second aspect, in some implementations of the second aspect, the apparatus further includes an adjustment unit and/or a first prompt unit, the adjustment unit is configured to adjust the pose of the rearview mirror when the pose of the rearview mirror is abnormal, and the first prompt unit is configured to: when the pose of the rearview mirror is abnormal, control a prompt apparatus to indicate that the pose of the rearview mirror is abnormal.

With reference to the second aspect, in some implementations of the second aspect, the adjustment unit is configured to: adjust the pose of the rearview mirror to a first pose when the vehicle travels toward a first parking space or when a width of a first planned path of the vehicle is less than or equal to a first width threshold, where a width of the first parking space is less than or equal to a second width threshold, and the first planned path is within a first range of the vehicle; or adjust the pose of the rearview mirror to a second pose when the vehicle travels toward a second parking space or when a width of a second planned path of the vehicle is greater than the first width threshold, where a width of the second parking space is greater than the second width threshold, and the second planned path is within a second range of the vehicle, where an overall width that is of the vehicle and that corresponds to the first pose is less than an overall width that is of the vehicle and that corresponds to the second pose.

With reference to the second aspect, in some implementations of the second aspect, the processing unit is further configured to: determine a folding angle of the rearview mirror based on the first vehicle body feature and the second vehicle body feature; and the adjustment unit is configured to adjust the pose of the rearview mirror based on the folding angle.

With reference to the second aspect, in some implementations of the second aspect, the first prompt unit is further configured to control the prompt apparatus to indicate that the pose of the rearview mirror is to be adjusted.

With reference to the second aspect, in some implementations of the second aspect, the apparatus further includes a second prompt unit, configured to: when the pose of the rearview mirror is abnormal and the vehicle travels toward a third parking space, or when the pose of the rearview mirror is abnormal and a width of a third planned path of the vehicle is less than or equal to a third width threshold, control the prompt apparatus to indicate to adjust the rearview mirror to a third pose, where a width of the third parking space is less than or equal to a fourth width threshold, and the third planned path is within a third range of the vehicle; or when the pose of the rearview mirror is abnormal and the vehicle travels toward a fourth parking space, or when the pose of the rearview mirror is abnormal and a width of a fourth planned path of the vehicle is greater than the third width threshold, control the prompt apparatus to indicate to adjust the rearview mirror to a fourth pose, where a width of the fourth parking space is greater than the fourth width threshold, and the fourth planned path is within a fourth range of the vehicle, where an overall width that is of the vehicle and that corresponds to the third pose is less than an overall width that is of the vehicle and that corresponds to the fourth pose.

With reference to the second aspect, in some implementations of the second aspect, the processing unit is further configured to: when the pose of the rearview mirror is abnormal, control the vehicle to suspend traveling or parking.

With reference to the second aspect, in some implementations of the second aspect, the first vehicle body feature indicates any one of the following: a proportion and/or a position of a vehicle body image on the first side in the image; or a position and/or a shape of a part or all of a contour line of a vehicle body image on the first side.

With reference to the second aspect, in some implementations of the second aspect, the first vehicle body feature is associated with an extrinsic parameter of the first image shooting apparatus.

According to a third aspect, a rearview mirror monitoring apparatus is provided, where the apparatus includes: a memory, configured to store a computer program; and a processor, configured to execute the computer program stored in the memory, to cause the apparatus to perform the method according to any one of the possible implementations of the first aspect.

According to a fourth aspect, a rearview mirror monitoring system is provided, where the system includes the apparatus according to any one of the possible implementations of the second aspect or the third aspect and a first image shooting apparatus.

According to a fifth aspect, an intelligent driving device is provided, where the intelligent driving device includes the apparatus according to any one of the possible implementations of the second aspect or the third aspect, or the intelligent driving device includes the apparatus according to any one of the possible implementations of the fourth aspect.

With reference to the fifth aspect, in some implementations of the fifth aspect, the intelligent driving device is a vehicle.

According to a sixth aspect, a computer program product is provided, where the computer program product includes computer program code, and when the computer program code is run on a computer, the computer is caused to perform the method according to any one of the possible implementations of the first aspect.

It should be noted that all or some of computer program code may be stored in a first storage medium. The first storage medium may be encapsulated together with a processor, or may be encapsulated separately from a processor.

According to a seventh aspect, a computer-readable medium is provided, where the computer-readable medium stores instructions, and when the instructions are executed by a processor, the processor is caused to implement the method according to any one of the possible implementations of the first aspect.

According to an eighth aspect, a chip is provided, where the chip includes a circuit, and the circuit is configured to perform the method according to any one of the possible implementations of the first aspect.

### BRIEF DESCRIPTION OF DRAWINGS

FIG. 1 is a functional diagram of an intelligent driving device according to an embodiment of this application;
FIG. 2 is a block diagram of a rearview mirror monitoring system according to an embodiment of this application;
FIG. 3 is a diagram of an application scenario of a rearview mirror monitoring method according to an embodiment of this application;
FIG. 4 is a block diagram of a rearview mirror monitoring method according to an embodiment of this application;
FIG. 5(a) to FIG. 5(e) are another diagram of an application scenario of a rearview mirror monitoring method according to an embodiment of this application;
FIG. 6(a) to FIG. 6(e) are still another diagram of an application scenario of a rearview mirror monitoring method according to an embodiment of this application;
FIG. 7 is a diagram of an included angle between baselines according to an embodiment of this application;
FIG. 8 is a block diagram of a rearview mirror monitoring apparatus according to an embodiment of this application; and
FIG. 9 is another block diagram of a rearview mirror monitoring apparatus according to an embodiment of this application.

### DESCRIPTION OF EMBODIMENTS

As described above, because a sensor that can detect a folding position of a rearview mirror is not deposed at the rearview mirror, if the rearview mirror is faulty (for example, an electric folding motor is faulty) or the rearview mirror is manually adjusted by a hand, a control system of a vehicle cannot determine the folding position of the rearview mirror. During traveling of the vehicle, if a folding angle of the rearview mirror does not reach a preset angle, the rearview mirror may be scraped, leading to a property loss of a user.

In view of this, embodiments of this application provide a rearview mirror method, an apparatus, and an intelligent driving device, to determine whether a pose of a rearview mirror is normal. When the pose of the rearview mirror is abnormal, a prompt is provided to a driver to indicate that the pose of the rearview mirror is abnormal and/or indicate to control an operating status of a vehicle. This helps reduce a risk of scraping the rearview mirror, thereby ensuring personal and property safety of a user.

To facilitate understanding of the solutions in embodiments of this application, concepts in this application are described below.
1. Extrinsic parameter: The extrinsic parameter is a parameter related to a mounting position of an image shooting apparatus, for example, a pitch (pitch), a roll (roll), and a yaw (yaw). The pitch is an included angle between an x-axis of an object coordinate system and an x-o-y plane of a ground coordinate system. The roll is an included angle between a y-axis of the object coordinate system and the x-o-y plane of the ground coordinate system. The yaw is an included angle between a projection of the x-axis of the object coordinate system on the x-o-y plane of the ground coordinate system and the y-axis of the ground coordinate system.
2. Folding angle of a rearview mirror: A foldable rearview mirror is used as an example. The folding angle of the rearview mirror is an included angle between an outer tangent plane of a rearview mirror housing (an upper mirror housing or a lower mirror housing) present when the rearview mirror is unfolded and an outer tangent plane of the rearview mirror housing present when the rearview mirror is folded to a limit position. The limit position may be understood as a position at which an included angle that can be supported by a steering device of the rearview mirror and that is between the rearview mirror and a vehicle body is minimum. The folding angle may be decomposed into a horizontal folding angle and a vertical folding angle. A four-wheeled vehicle is used as an example. The horizontal folding angle may be an angle at which a rearview mirror is folded in a plane on which four tires of the vehicle are located, and the vertical folding angle may be an angle at which the rearview mirror is folded perpendicular to the plane on which the four tires of the vehicle are located. It may be understood that both the horizontal folding angle and the vertical folding angle of the rearview mirror are greater than or equal to zero. When the rearview mirror is folded to the limit position, both the horizontal folding angle and the vertical folding angle of the rearview mirror are zero. A state of the rearview mirror present when the rearview mirror is folded to the limit position is a folded state, and a state of the rearview mirror present when the horizontal folding angle of the rearview mirror is not zero is an unfolded state.
3. Folding or retraction of a rearview mirror: The rearview mirror is controlled to fold in a direction close to a vehicle body, or the rearview mirror is controlled to retract into the vehicle body.
4. Unfolding or deployment of a rearview mirror: The rearview mirror is controlled to fold away from a vehicle body, or the rearview mirror is controlled to extend out of the vehicle body.

The following describes technical solutions of this application with reference to accompanying drawings.

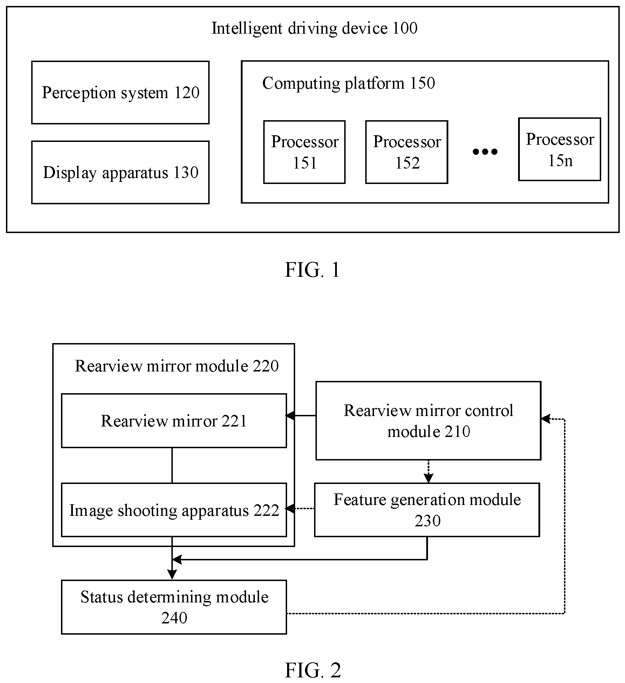

FIG. 1 is a functional block diagram of an intelligent driving device according to an embodiment of this application. As shown in FIG. 1, the intelligent driving device 100 may include a perception system 120, a display apparatus 130, and a computing platform 150. The perception system 120 may include several sensors configured to sense surrounding environment information of the intelligent driving device 100. For example, the perception system 120 may include a positioning system. The positioning system may be a global positioning system (global positioning system, GPS), a BeiDou system, or another positioning system. For another example, the perception system 120 may further include one or more of an inertial measurement unit (inertial measurement unit, IMU), a lidar, a millimeter-wave radar, an ultrasonic radar, and an image shooting apparatus. The image shooting apparatus may include an image shooting apparatus disposed at a rearview mirror, and the image shooting apparatus may include but is not limited to a fisheye camera and a wide-angle camera.

The display apparatus 130 in a cockpit is mainly classified into two types. A first type is an in-vehicle display, and a second type is a projection display, for example, a head-up display (head-up display, HUD). The in-vehicle display is a physical display, and is an important part of an in-vehicle infotainment system. A plurality of displays may be disposed in the cockpit, for example, a digital dashboard display and a central display screen. The head-up display is also referred to as a head-up display system, and is mainly configured to display driving information such as a speed and navigation on a display device (for example, a windshield) in front of a driver, to reduce line-of-sight transfer time of the driver, avoid a pupil change caused by a line-of-sight transfer of the driver, and improve driving safety and comfort. For example, the HUD includes a combiner-HUD (combiner-HUD, C-HUD) system, a windshield-HUD (windshield-HUD, W-HUD) system, and an augmented reality-HUD (augmented reality-HUD, AR-HUD) system. The display apparatus may further include a human-machine interface (human-machine interface, HMI), configured to prompt a user of a switching status of a planning mode.

Some or all of functions of the intelligent driving device 100 may be controlled by the computing platform 150. The computing platform 150 may include processors 151 to 15n. The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In a reconfigurable hardware circuit, a process in which the processor loads a configuration document to implement hardware circuit configuration may be understood as a process in which the processor loads instructions to implement functions of some or all of the units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may include a memory. The memory is configured to store instructions. Some or all of the processors 151 to 15n may invoke the instructions in the memory, to implement a corresponding function.

The intelligent driving device 100 may include an advanced driving assistant system (advanced driving assistant system, ADAS). The ADAS obtains information from around the intelligent driving device by using a plurality of sensors (including but not limited to a lidar, a millimeter-wave radar, an image shooting apparatus, an ultrasonic sensor, a global positioning system, and an inertia measurement unit) on the intelligent driving device, and analyzes and processes the obtained information, to implement functions such as obstacle perception, target recognition, intelligent driving device positioning, path planning, and driver monitoring/reminder, so that driving safety, automation, and comfort of the intelligent driving device are improved.

In terms of logical functions, the ADAS system usually includes three main functional modules: a perception module, a decision-making module, and an execution module. The perception module senses an environment around a vehicle body by using a sensor, and inputs corresponding real-time data to a processing center at a decision-making layer. The perception module mainly includes a vehicle-mounted camera, an ultrasonic radar, a millimeter-wave radar, a lidar, or the like. Based on information obtained by the perception module, the decision-making module uses a compute apparatus and an algorithm to make a corresponding decision. After receiving a decision signal from the decision-making module, the execution module takes a corresponding action, for example, driving, a lane change, steering, braking, or warning.

At different autonomous driving levels (L0 to L5), the ADAS may implement different levels of autonomous driving assistance based on information obtained by utilizing an artificial intelligence algorithm and a plurality of sensors. The foregoing autonomous driving levels (L0 to L5) are based on a grading standard of the society of automotive engineers (society of automotive engineers, SAE). The level L0 indicates no automation, the level L1 indicates driver assistance, the level L2 indicates partial automation, the level L3 indicates conditional automation, the level L4 indicates high automation, and the level L5 indicates full automation. Tasks of monitoring and responding to road conditions at the levels L1 to L3 are jointly completed by a driver and a system, and the driver needs to take over a dynamic driving task. The levels L4 and L5 enable the driver to be completely transformed into a passenger. Currently, functions that can be implemented by the ADAS mainly include but are not limited to adaptive cruise, automatic emergency braking, automatic parking, blind spot monitoring, traffic warning/braking at front crossroads, traffic warning/braking at rear crossroads, preceding vehicle collision warning, lane departure warning, lane keeping assistance, trailing vehicle anti-collision warning, traffic sign recognition, traffic jam assistance, highway assistance, and the like. It should be understood that the foregoing functions may have specific modes at different autonomous driving levels (L0 to L5). A higher autonomous driving level corresponds to a more intelligent mode. For example, the automatic parking may include automatic parking assist (auto parking assist, APA), remote parking assist (remote parking assist, RPA), and automated valet parking (auto valet parking, AVP). For the APA, the driver does not need to operate a steering wheel, but still needs to monitor a status of the intelligent driving device in real time on the intelligent driving device. For the RPA, the driver may use a terminal (for example, a mobile phone) to remotely park the intelligent driving device outside the intelligent driving device. For the AVP, the intelligent driving device may complete parking without the driver. In terms of corresponding autonomous driving levels, the APA is approximately at the level L2, the RPA is approximately at the levels L2 and L3, and the AVP is approximately at the level L4.

The intelligent driving device in this application may include a transportation tool on a road, a transportation tool on water, an air transportation tool, an industrial device, an agricultural device, an entertainment device, or the like. For example, the intelligent driving device may be a vehicle. The vehicle is a vehicle in a broad sense, and may be a transportation tool (for example, a commercial vehicle, a passenger vehicle, a motorcycle, an airborne vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application. For another example, the vehicle may be a transport tool like an airplane or a ship. That the intelligent driving device is a vehicle is used for description below.

In this application, the image shooting apparatus at the rearview mirror may be disposed at a base of the rearview mirror, or may be disposed at an edge of the rearview mirror, for example, disposed at an upper edge or a lower edge of the rearview mirror. An extrinsic parameter of the image shooting apparatus at the rearview mirror may change with a pose of the rearview mirror. A change in the extrinsic parameter of the image shooting apparatus leads to a change in a vehicle body-related feature in an image captured by the image shooting apparatus. For example, a proportion and a position of a vehicle body image in an entire image change, or a shape and/or a position of a contour line of a vehicle body image in an image change. Further, the computing platform 150 may determine, based on an image captured by the image shooting apparatus at the rearview mirror, whether an actual pose of the rearview mirror is consistent with a target pose, or the computing platform 150 may determine an actual pose of the rearview mirror based on an image captured by the image shooting apparatus at the rearview mirror.

It should be noted that a rearview mirror monitoring method provided in this application may be applied to status monitoring or position monitoring of an exterior rearview mirror, for example, status monitoring or pose monitoring of an external rearview mirror like a foldable rearview mirror or a telescopic rearview mirror. The rearview mirror in this application may be a rearview mirror whose pose can be automatically adjusted, or may be a rearview mirror whose pose can be manually adjusted only. The following uses a foldable rearview mirror as an example for description. If a person skilled in the art applies the following solutions to the monitoring field of other external rearview mirrors such as a telescopic rearview mirror based on the technical concept of this application, it shall be deemed to fall within the protection scope of this application.

FIG. 2 is a block diagram of a rearview mirror monitoring system according to an embodiment of this application. As shown in FIG. 2, the system includes a rearview mirror control module 210, a rearview mirror module 220, a feature generation module 230, and a status determining module 240. The rearview mirror module 220 includes a rearview mirror 221 and an image shooting apparatus 222. The image shooting apparatus 222 may include one or more image shooting apparatuses in the perception system 120. The feature generation module 230 and the status determining module 240 may include one or more processors in the computing platform 150 shown in FIG. 1.

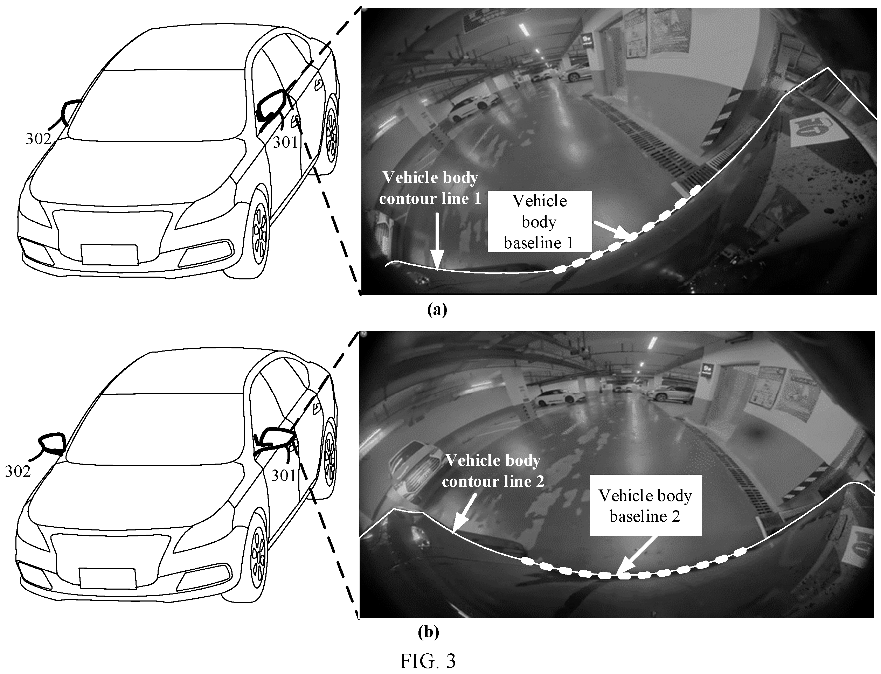

The rearview mirror 221 may include a rearview mirror 301 and/or a rearview mirror 302 shown in FIG. 3. For a manner of disposing the image shooting apparatus 222 at the rearview mirror 221, refer to the descriptions in the foregoing embodiment. Details are not described herein again. The image shooting apparatus 222 may be configured to obtain an image of an environment around a vehicle including a vehicle body. For example, when the rearview mirror 221 is folded to different positions (that is, the rearview mirror 221 is in different poses), extrinsic parameters of the image shooting apparatus 222 are separately calibrated. For example, when the rearview mirror 221 is in a folded state shown in (a) in FIG. 3, the extrinsic parameters of the image shooting apparatus 222 are separately calibrated as a pitch angle a0, a roll angle b0, and a yaw angle c0, that is, yaw=a0, pitch=b0, and roll=c0. When the rearview mirror 221 is unfolded to a position (referred to as a position 1 below) shown in (b) in FIG. 3, the extrinsic parameters of the image shooting apparatus 222 are calibrated as a pitch angle a1, a roll angle b1, and a yaw angle c1, that is, yaw=a1, pitch=b1, and roll=c1. It may be understood that proportions of vehicle body images in images captured by the image shooting apparatus 222 under different extrinsic parameters are different and positions of the vehicle body images in the images are different, and shapes of vehicle body contour lines are also different and/or positions of the vehicle body contour lines are also different. For example, when the rearview mirror is in a folded state, an image captured by the image shooting apparatus 222 is shown in (a) in FIG. 3, and a contour line of a vehicle body image in the image is a vehicle body contour line 1. When the rearview mirror is folded to the position 1, an image captured by the image shooting apparatus 222 is shown in (b) in FIG. 3, and a contour line of a vehicle body image in the image is a vehicle body contour line 2. If a contour line of a fixed position of the vehicle body is used as a reference baseline, it can be learned from FIG. 3 that reference baselines corresponding to the rearview mirror in the folded state and the rearview mirror in the folding position 1 are respectively the vehicle body baseline 1 and the vehicle body baseline 2. A correspondence between the folding position of the rearview mirror 221 and a feature of the image captured by the image shooting apparatus 222 may be stored in a memory of the rearview mirror monitoring system, or stored in the feature generation module 230. The feature of the image captured by the image shooting apparatus 222 includes but is not limited to: a proportion and/or a position of the vehicle body image in the entire image, a shape and/or a position of the contour line of the vehicle body image, and a shape and/or a position of the reference baseline.

The rearview mirror control module 210 is configured to control a folding angle of the rearview mirror 221. For example, the rearview mirror control module 210 sends a control instruction to an electric folding motor of the rearview mirror 221, where the control instruction is used to control the rearview mirror 221 to fold to a preset position, or control the rearview mirror 221 to fold to a preset angle. When the electric folding motor executes the control instruction, the folding angle of the rearview mirror 221 is controlled. In a specific implementation process, the rearview mirror control module 210 may control the folding angle of the rearview mirror 221 in response to a user operation. For example, the rearview mirror control module 210 may be a rearview mirror adjustment button, and control the folding angle of the rearview mirror 221 in response to an operation of pressing the rearview mirror adjustment button by a user. Alternatively, the rearview mirror control module 210 may control the folding angle of the rearview mirror 221 based on an operating status and/or a change in an operating status of the vehicle. For example, when the vehicle parks into a parking space and is powered off, the folding angle of the rearview mirror 221 is controlled to decrease, so that a status of the rearview mirror changes from an unfolded state to a folded state. Alternatively, when the vehicle is powered on, the folding angle of the rearview mirror 221 is controlled to increase, so that a status of the rearview mirror changes from a folded state to an unfolded state. Alternatively, when a gear of the vehicle changes from drive to reverse, the folding angle of the rearview mirror is controlled, so that a view angle of the rearview mirror is suitable for observing a position of an obstacle behind the vehicle during reversing. Alternatively, when a gear of the vehicle changes from reverse to drive, the folding angle of the rearview mirror is controlled, so that a view angle of the rearview mirror is suitable for observing a trailing vehicle during traveling.

In some implementations, the feature generation module 230 may obtain the control instruction of the rearview mirror control module 210, and determine, according to the control instruction, a feature of an image captured by the image shooting apparatus 222 corresponding to the control instruction. The feature of the image captured by the image shooting apparatus 222 corresponding to the control instruction may be understood as a feature that the image captured by the image shooting apparatus 222 should have if the rearview mirror 221 is folded to the preset position or folded to the preset angle according to the control instruction. In some implementations, when or after the feature generation module 230 may obtain the control instruction, the image shooting apparatus 222 is controlled to capture an image in real time; or when or after the feature generation module 230 determines the feature of the image captured by the image shooting apparatus 222 corresponding to the control instruction, the image shooting apparatus 222 is controlled to capture an image in real time. More specifically, the feature generation module 230 may determine, based on pre-stored feature information, the feature of the image captured by the image shooting apparatus 222 corresponding to the control instruction, where the feature information includes a correspondence between a plurality of groups of folding positions of the rearview mirror 221 and the feature of the image captured by the image shooting apparatus 222.

In some other implementations, the feature generation module 230 may determine a target pose of the rearview mirror 221 based on one or more of the operating status of the vehicle, a target parking area, and a width of a planned path, and determine, based on the target pose, a feature of an image captured when the extrinsic parameter of the image shooting apparatus 222 is an extrinsic parameter corresponding to the target pose.

The status determining module 240 is configured to determine, based on a feature of the image captured by the image shooting apparatus 222 in real time and the feature of the image determined by the feature generation module 230, whether a pose of the rearview mirror 221 is normal. During actual implementation, due to a rearview mirror fault, manual adjustment of the rearview mirror, or the like, after the rearview mirror control module 210 delivers the control instruction, the rearview mirror 221 fails to fold to the preset position. As a result, the feature of the image captured by the image shooting apparatus 222 in real time does not match the feature of the image determined by the feature generation module 230. In the foregoing case, it is determined that the pose of the rearview mirror 221 is abnormal, and at least one of the following is performed: giving a driver a prompt that the pose of the rearview mirror is abnormal, and controlling the vehicle to suspend traveling or parking. In some implementations, the status determining module 240 obtains, by using an image processing algorithm, the feature of the image captured by the image shooting apparatus 222 in real time. In some implementations, the status determining module 240 may perform de-distortion processing on the image, to determine an included angle between a reference baseline of the image determined by the feature generation module 230 and an actual baseline of the image captured by 222 in real time, and send the included angle to the rearview mirror control module 210, so that the rearview mirror control module 210 adjusts the folding angle of the rearview mirror based on the included angle.

It should be understood that the system shown in FIG. 2 is merely an example for description. During actual implementation, the rearview mirror monitoring system may include more or fewer modules. The feature generation module 230 and the status determining module 240 may be combined into one module. For another example, the rearview mirror monitoring system may further include a prompt module. The prompt module may include the display apparatus 130 shown in FIG. 1, configured to give the driver a prompt that the pose of the rearview mirror is abnormal, when the pose of the rearview mirror is abnormal.

It should be further understood that the extrinsic parameter of the image shooting apparatus 222 present when the rearview mirror is in the folded state and the extrinsic parameter of the image shooting apparatus 222 present when the rearview mirror is folded to the position 1 are merely examples for description. During actual implementation, the rearview mirror monitoring system may store more extrinsic parameters of the image shooting apparatus 222 present when the rearview mirror is folded to another position (or the rearview mirror is in another pose). Correspondingly, the rearview mirror monitoring system may further store features of images captured by the image shooting apparatus 222 under different extrinsic parameters.

The foregoing describes the rearview mirror monitoring system provided in embodiments of this application. The following describes in detail a rearview mirror monitoring method provided in this application.

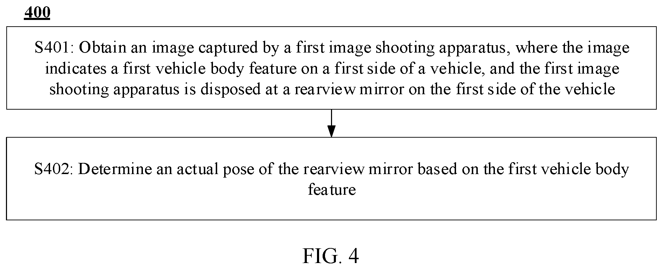

FIG. 4 is a schematic flowchart of a rearview mirror monitoring method according to an embodiment of this application. The method 400 shown in FIG. 4 may be performed by the intelligent driving device 100 shown in FIG. 1, or the method 400 may be performed by the system shown in FIG. 2. Specifically, the method 400 may include S401 and S402.

S401: Obtain an image captured by a first image shooting apparatus, where the image indicates a first vehicle body feature on a first side of a vehicle, and the first image shooting apparatus is disposed at a rearview mirror on the first side of the vehicle.

For example, the first image shooting apparatus may include the image shooting apparatus 222 in the foregoing embodiment, the rearview mirror may include the rearview mirror 221 in the foregoing embodiment, and the first side of the vehicle may be a left side or a right side of the vehicle. When the first side of the vehicle is the left side of the vehicle, the rearview mirror may include a rearview mirror 301, and the first image shooting apparatus may be an image shooting apparatus disposed at the rearview mirror 301. When the first side of the vehicle is the right side of the vehicle, the rearview mirror may include a rearview mirror 302, and the first image shooting apparatus may be an image shooting apparatus disposed at the rearview mirror 302. The image captured by the first image shooting apparatus may be understood as an image captured by the first image shooting apparatus in real time.

In some implementations, the first vehicle body feature is associated with an extrinsic parameter of the first image shooting apparatus. The first vehicle body feature being associated with the extrinsic parameter of the first image shooting apparatus may be understood as follows: The first vehicle body feature includes the extrinsic parameter that is of the first image shooting apparatus and that is determined based on the image captured by the first image shooting apparatus in real time; or the first vehicle body feature changes with the extrinsic parameter of the first image shooting apparatus.

In some implementations, the first vehicle body feature may include a feature of a vehicle body on the first side in the image captured by the first image shooting apparatus in real time. The first vehicle body feature may include at least one of the following: a proportion and/or a position of a vehicle body image of the first side in the entire image, a shape of a contour line of the vehicle body image of the first side and/or a position of the contour line of the vehicle body image of the first side in the image, and a shape of a reference baseline and/or a position of the reference baseline in the image.

S402: Determine an actual pose of the rearview mirror based on the first vehicle body feature.

For example, when comparison with the feature information in the foregoing embodiment is performed based on the first vehicle body feature, and the first vehicle body feature matches a specific feature of the feature information, a pose corresponding to the specific feature is determined as the actual pose of the rearview mirror. That the first vehicle body feature matches the specific feature may include: The first vehicle body feature is equal to or the same as the specific feature, or a difference between the first vehicle body feature and the specific feature is less than a preset threshold.

In some implementations, when the first vehicle body feature does not match a second vehicle body feature, it is determined that a pose of the rearview mirror is abnormal, where the second vehicle body feature is a vehicle body feature that is on the first side and that corresponds to a target pose of the rearview mirror. Alternatively, when the first vehicle body feature matches a second vehicle body feature, it is determined that a pose of the rearview mirror is normal.

In some implementations, the target pose is a pose that is of the rearview mirror and that is indicated by a vehicle control instruction, or the target pose is a pose that is of the rearview mirror and that is determined based on some or more of an operating status of the vehicle, a target parking area, and a width of a planned path. The vehicle control instruction is used to control the rearview mirror to be adjusted to a preset pose. For example, the vehicle control instruction may include a control instruction sent by the rearview mirror control 210.

For example, the second vehicle body feature may include a feature of the vehicle body on the first side in a pre-stored image captured by the first image shooting apparatus. The second vehicle body feature may include at least one of the following: a proportion and/or a position of the vehicle body image of the first side in the entire pre-stored image, the shape of the contour line of the vehicle body image of the first side and/or a position of the contour line of the vehicle body image of the first side in the pre-stored image, and the shape of the reference baseline and/or a position of the reference baseline in the pre-stored image. The pre-stored image is an image obtained by the first image shooting apparatus when the extrinsic parameter is an extrinsic parameter calibrated in a pose that is of the rearview mirror and that is indicated by the vehicle control instruction. In some other implementations, the second vehicle body feature may alternatively include an extrinsic parameter, of the first image shooting apparatus, calibrated in a pose that is of the rearview mirror and that is indicated by the vehicle control instruction.

For example, the second vehicle body feature may be determined based on the feature information in the foregoing embodiment. A form of the feature information may be shown in Table 1.

**Table 1**

| Target pose | Extrinsic parameters of the first image shooting apparatus | Second vehicle body feature |
|---|---|---|
| Pose A | yaw=a0, pitch=b0, roll=c0 | Feature 1 |
| Pose B | yaw=a1, pitch=b1, roll=c1 | Feature 2 |
| Pose C | yaw=a2, pitch=b2, roll=c2 | Feature 3 |
| ... | ... | ... |

It should be understood that the feature information shown in Table 1 is merely an example for description. During actual implementation, the feature information may include only a correspondence between the target pose and the second vehicle body feature, and the feature information may include more or fewer correspondences between the target pose and the second vehicle body feature. In addition, when the target pose is the pose that is of the rearview mirror and that is indicated by the vehicle control instruction, the feature information may include only a correspondence between the vehicle control instruction and the second vehicle body feature.

In some implementations, when the target pose is the pose that is of the rearview mirror and that is determined based on one or more of the operating status of the vehicle, the target parking area, and the width of the planned path, a form of the feature information may be shown in Table 2.

**Table 2**

| Operating status | Other information | Target pose | Extrinsic parameters of the first image shooting apparatus | Second vehicle body feature |
|---|---|---|---|---|
| Traveling | None | Pose a | yaw=A0, pitch=B0, roll=C0 | Feature A |
| | The width of the planned path is less than or equal to a first width threshold. | Pose b | yaw=A1, pitch=B1, roll=C1 | Feature B |
| | The width of the planned path is greater than a first width threshold. | Pose c | yaw=A2, pitch=B2, roll=C2 | Feature C |
| Park | None | Pose d | yaw=A3, pitch=B3, roll=C3 | Feature D |
| | A width of the target parking area is less than or equal to a second width threshold. | Pose e | yaw=A4, pitch=B4, roll=C4 | Feature E |
| | A width of the target parking area is greater than a second width threshold. | Pose f | yaw=A5, pitch=B5, roll=C5 | Feature F |
| Power off | None | Pose g | yaw=A6, pitch=B6, roll=C6 | Feature G |
| Power on | None | Pose h | yaw=A7, pitch=B7, roll=C7 | Feature H |
| ... | ... | ... | ... | ... |

It should be understood that the feature information shown in Table 2 is merely an example for description. During actual implementation, the feature information may include only a correspondence between the operating status and the second vehicle body feature, and the feature information may include more or fewer correspondences between the operating status and the second vehicle body feature. In addition, the pose a and the pose c may be a same pose. In this case, extrinsic parameters that are of the first image shooting apparatus and that correspond to the pose a and the pose c are the same, and second vehicle body features that are of the first image shooting apparatus and that correspond to the pose a and the pose c are the same. The pose d and the pose f may also be a same pose. In this case, extrinsic parameters that are of the first image shooting apparatus and that correspond to the pose d and the pose f are the same, and second vehicle body features that are of the first image shooting apparatus and that correspond to the pose d and the pose f are the same. The pose b, the pose e, and the pose g may also be a same pose. In this case, extrinsic parameters that are of the first image shooting apparatus and that correspond to the pose b, the pose e, and the pose g may be the same, and second vehicle body features that are of the first image shooting apparatus and that correspond to the pose b, the pose e, and the pose g may be the same.

In an example, that the first vehicle body feature does not match the second vehicle body feature may include: The first vehicle body feature is not equal to or is different from the second vehicle body feature. In another example, that the first vehicle body feature does not match the second vehicle body feature when the first vehicle body feature and the second vehicle body feature are respectively the proportion and the position of the vehicle body image of the first side in the entire image may include: A difference between proportions of the vehicle body image of the first side in the entire image is greater than a preset proportion threshold. The preset proportion threshold may be 0, 3%, or another value. In still another example, that the first vehicle body feature does not match the second vehicle body feature when the first vehicle body feature and the second vehicle body feature are respectively shapes of the reference baseline may include: An angle between reference baselines is greater than an angle threshold, or a shape similarity of reference baselines is less than or equal to a first similarity threshold. The angle threshold may be 0 degrees (degrees, °), 3°, or another value. The first similarity threshold may be 95%, 98%, or another value. In still another example, that the first vehicle body feature does not match the second vehicle body feature when the first vehicle body feature and the second vehicle body feature are respectively shapes of contour lines of the vehicle body image of the first side may include: A similarity between the shapes of the contour lines of the vehicle body image of the first side is less than or equal to a second similarity threshold. The second similarity threshold may be 95%, 98%, or another value.

For example, the pose of the rearview mirror being abnormal may include that the actual pose and the target pose of the rearview mirror are different, or a deviation between the actual pose and the target pose of the rearview mirror exceeds a preset threshold.

In some implementations, when the vehicle control instruction is obtained or when a feature of an image determined by the feature generation module 230 is obtained, S401 is performed.

In some implementations, when it is determined that the pose of the rearview mirror is abnormal, the method further includes: adjusting the pose of the rearview mirror and/or controlling a prompt apparatus to indicate that the pose of the rearview mirror is abnormal. For example, the prompt apparatus includes but is not limited to a display apparatus and a sound-making apparatus (for example, a speaker).

In some implementations, adjusting the pose of the rearview mirror may include: adjusting the pose of the rearview mirror to a first pose when the vehicle travels toward a first parking space or when a width of a first planned path of the vehicle is less than or equal to the first width threshold, where a width of the first parking space is less than or equal to the second width threshold, and the first planned path is within a first range of the vehicle; or adjusting the pose of the rearview mirror to a first pose when the vehicle travels toward a second parking space or when a width of a second planned path of the vehicle is greater than the first width threshold, where a width of the second parking space is greater than the second width threshold, and the second planned path is within a second range of the vehicle, where an overall width that is of the vehicle and that corresponds to the first pose is less than an overall width that is of the vehicle and that corresponds to the second pose.

The overall width of the vehicle is a distance between outer edges of rearview mirrors on the left and right sides of the vehicle. When the rearview mirrors on both sides are in a folded state, the overall width of the vehicle is the smallest. When the rearview mirrors on both sides are unfolded to a maximum position, the overall width of the vehicle is the largest. In this embodiment of this application, a distance between outer edges of the rearview mirrors on both sides present when the rearview mirrors on both sides are unfolded to a maximum position is referred to as a maximum overall width of the vehicle.

For example, the first planned path (or the second planned path) may be a path along which the vehicle is to travel, and the first range (or the second range) may be a range within a specific distance from the vehicle in a traveling direction of the vehicle. The specific distance may be 5 meters, 10 meters, or another value. For example, the specific distance is 10 meters. When the vehicle travels in a direction toward a head of the vehicle (referred to as a front of the vehicle below), the first range (or the second range) may be a range within 10 meters from the front of the vehicle to the head of the vehicle. When the vehicle travels in a direction toward a tail of the vehicle (referred to as a rear of the vehicle below), the first range (or the second range) may be a range within 10 meters from the rear of the vehicle to the tail of the vehicle. The first width threshold may be determined based on the maximum overall width of the vehicle. For example, the first width threshold may be a sum of the maximum overall width and a preset width. The preset width may be 10 centimeters, 20 centimeters, or another value.

For example, the first parking space may be a narrow parking space, and the second width threshold may be determined based on a vehicle model, or the second width threshold may be determined based on the maximum overall width of the vehicle. For example, the second width threshold may be a sum of the maximum overall width and a preset width. The second parking space may be a common parking space or a wide parking space. The first parking space and the second parking space may be parking spaces determined by the vehicle based on parking lines, or may be parking spaces determined by the vehicle based on obstacles, or may be parking spaces determined by the vehicle based on parking lines and obstacles around the parking lines.

For example, the first pose or the second pose may be the target pose, or the first pose or the second pose may be another preset pose.

In some implementations, when the pose of the rearview mirror is abnormal, the method further includes: when the vehicle travels toward a third parking space or when a width of a third planned path of the vehicle is less than or equal to a third width threshold, controlling the prompt apparatus to indicate to adjust the rearview mirror to a third pose, where a width of the third parking space is less than or equal to a fourth width threshold, and the third planned path is within a third range of the vehicle; or when the vehicle travels toward a fourth parking space or when a width of a fourth planned path of the vehicle is greater than the third width threshold, controlling the prompt apparatus to indicate to adjust the rearview mirror to a fourth pose, where a width of the fourth parking space is greater than the fourth width threshold, and the fourth planned path is within a fourth range of the vehicle, where an overall width that is of the vehicle and that corresponds to the third pose is less than an overall width that is of the vehicle and that corresponds to the fourth pose.

For example, the third parking space and the first parking space may be a same parking space, the fourth parking space and the second parking space may be a same parking space, the third width threshold and the first width threshold may be a same value, the fourth width threshold and the second width threshold may be a same value, the third planned path and the first planned path may be a same path, the fourth planned path and the second planned path may be a same path, the third range and the first range may be a same range, and the fourth range and the second range may be a same range.

In some implementations, the method further includes: when the pose of the rearview mirror is abnormal, controlling the vehicle to suspend traveling or parking. Controlling the vehicle to suspend traveling may include: controlling a speed of the vehicle to decrease to zero. Controlling the vehicle to suspend parking may include: controlling the speed of the vehicle to decrease to zero; or controlling the vehicle to continue to travel along a parking trajectory until the vehicle body enters a target parking space and controlling the speed of the vehicle to decrease to zero.

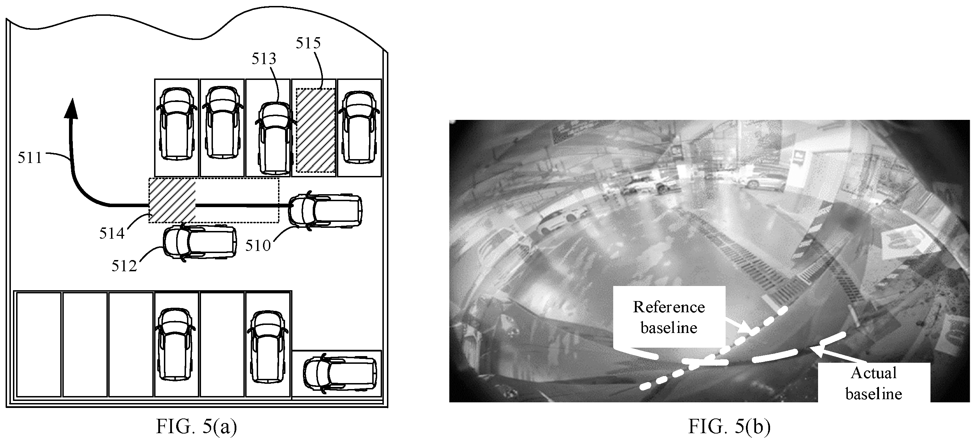

FIG. 5(a) to FIG. 6(e) show some application scenarios of the foregoing solutions.

FIG. 5(a) to FIG. 5(e) show a scenario in which a vehicle parks in a narrow parking space or a narrow path exists in a target traveling path of a vehicle. As shown in FIG. 5(a), in a scenario, a vehicle 510 travels along a planned path 511, and a rearview mirror of the vehicle 510 is unfolded to a pose (for example, a pose 1) suitable for observing a trailing vehicle during traveling. Due to limitations of a vehicle 512 and a parking line, a width of a part that is of the planned path 511 and that passes through an area 514 is less than a width threshold (for example, a first width threshold). In this case, a rearview mirror control module of the vehicle 510 may control the rearview mirror to be retracted (for example, a pose 2). In another scenario, the vehicle 510 selects a parking space 515 as a target parking space, and a rearview mirror of the vehicle 510 is unfolded to a pose (for example, a pose 3) suitable for observing a position of an obstacle around the parking space during parking. Due to a limitation of a vehicle 513, a width of the parking space 515 is less than a width threshold (for example, a second width threshold). In this case, a rearview mirror control module of the vehicle 510 may control the rearview mirror to be retracted (for example, a pose 2).

During actual implementation of the foregoing two scenarios, a motor configured to control a pose of the rearview mirror may execute an instruction of the rearview mirror control module, to control the rearview mirror to reach the pose 2. Alternatively, during execution of an instruction of the rearview mirror control module, a motor configured to control a pose of the rearview mirror may fail to control the rearview mirror to reach the pose 2 due to an unexpected fault of the motor. Alternatively, a motor may not execute an instruction of the rearview mirror control module due to a motor fault or the like, causing the rearview mirror to keep an original pose (for example, the pose 1 or the pose 2). Therefore, whether the pose of the rearview mirror is normal can be monitored according to the rearview mirror monitoring method provided in this embodiment of this application. As shown in FIG. 5(b), if the rearview mirror of the vehicle 510 is retracted, an image captured by an image shooting apparatus disposed at the rearview mirror should have a reference baseline. After the rearview mirror control module delivers a control instruction, if a position and a shape of an actual baseline in an image actually captured by the image shooting apparatus disposed at the rearview mirror match those of the reference baseline, it is determined that the pose of the rearview mirror is normal; or if a position or a shape of an actual baseline does not match that of the reference baseline, it is determined that the pose of the rearview mirror is abnormal. For example, if the actual baseline is shown in FIG. 5(b), that is, the reference baseline does not overlap the actual baseline, it is determined that the pose of the rearview mirror is abnormal.

A process in which the vehicle 510 parks into the parking space 515 is used as an example. When the pose of the rearview mirror is abnormal (for example, the rearview mirror is in an unfolded state), the vehicle 510 may indicate, by using a sound-making apparatus such as a speaker, that the pose of the rearview mirror is abnormal and/or indicate to adjust the rearview mirror to the pose 2, and/or the vehicle 510 may indicate, through a graphical user interface (graphical user interface, GUI) of a display apparatus such as a central display screen, that the pose of the rearview mirror is abnormal and/or indicate to adjust the rearview mirror to the pose 2.

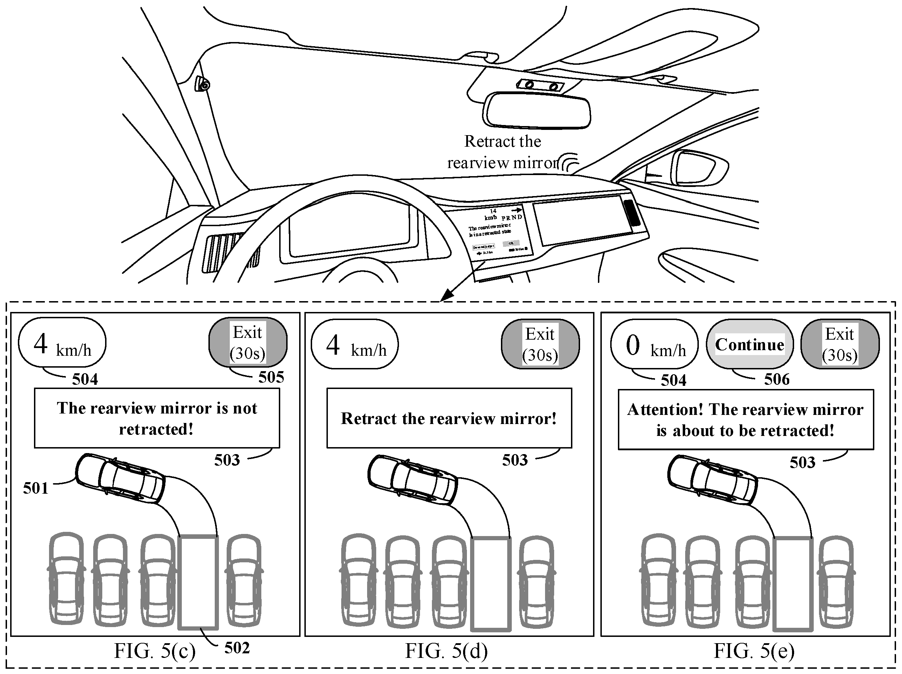

As shown in FIG. 5(c), the GUI may include a parking interface, and the parking interface includes an icon 501 indicating the vehicle 510, an icon 502 indicating the parking space 515, and a prompt dialog box 503. For example, the vehicle 510 may control the prompt dialog box 503 to display "The rearview mirror is not retracted!" or "The rearview mirror is in an abnormal state!" to indicate that the pose of the rearview mirror is abnormal. For example, the parking interface may further include an icon 504 for displaying a real-time vehicle speed and a parking control button 505. When a user may tap the button 505, the vehicle 510 exits a parking procedure.

In some implementations, as shown in FIG. 5(d), the vehicle 510 may alternatively control the prompt dialog box 503 to display "Retract the rearview mirror!" to indicate to adjust the rearview mirror to the pose 2.

In some implementations, when the pose of the rearview mirror is abnormal, the vehicle 510 may control the rearview mirror to adjust the pose of the rearview mirror to the pose 2. Before adjusting the pose of the rearview mirror, the vehicle 510 may control the parking interface to display "Attention! The rearview mirror is about to be retracted!" to indicate to adjust the pose of the rearview mirror.

In some implementations, when the pose of the rearview mirror is abnormal, the vehicle 510 suspends a parking process or stops traveling. As shown in FIG. 5(e), the icon 504 shows that a speed of the vehicle 510 decreases to 0. In addition, the parking interface shown in FIG. 5(e) further includes a parking control button 506. After the vehicle 510 suspends parking, when the user taps the button 506, the vehicle 510 resumes a parking procedure, that is, the vehicle 510 continues to park into the target parking space 515. If the vehicle 510 can automatically adjust the pose of the rearview mirror, before the vehicle 510 suspends parking and adjusts the pose of the rearview mirror, the prompt dialog box 503 on the parking interface may display "Attention! The rearview mirror is about to be retracted!" to indicate a driver to adjust the pose of the rearview mirror. In addition, when the vehicle 510 suspends parking, the prompt dialog box 503 on the parking interface can further display prompts such as "The rearview mirror is not retracted!", "The rearview mirror is in an abnormal state!", or "Retract the rearview mirror!".

In FIG. 5(a) to FIG. 5(e), the vehicle 510 is an example of the vehicle in the method 400, the parking space 515 is an example of the first parking space or the third parking space in the method 400, a part that is of the path 511 and that is located in the area 514 is an example of the first planned path or the third planned path in the method 400, and the actual baseline and the reference baseline are an example of the first vehicle body feature and an example of the second vehicle body feature respectively. The pose 2 is an example of the first pose or the third pose in the method 400, or the pose 2 is an example of the target pose in the method 400.

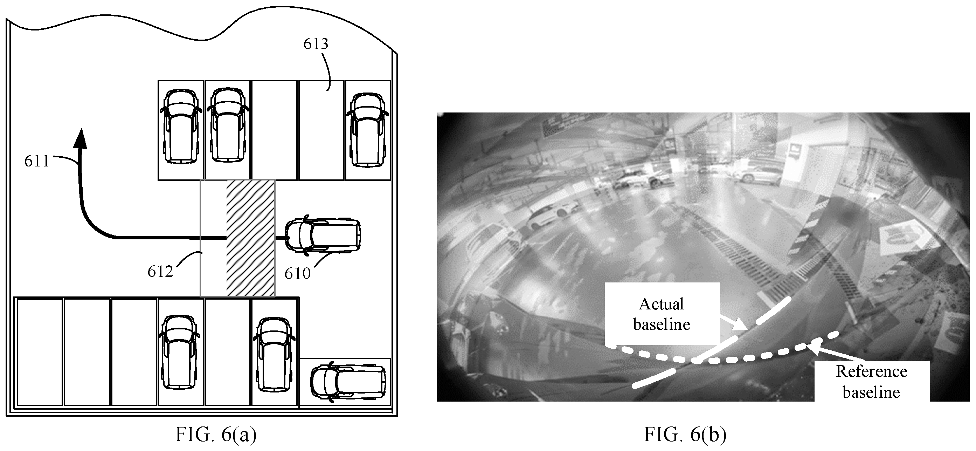

FIG. 6(a) to FIG. 6(e) show a scenario in which a vehicle parks in a non-narrow parking space or no narrow paths exist in a target traveling path of a vehicle. As shown in FIG. 6(a), in a scenario, a vehicle 610 travels along a planned path 611, and a rearview mirror of the vehicle 610 is unfolded to a pose (for example, a pose 4) suitable for observing a trailing vehicle during traveling. Because a width of a part that is of the planned path 611 and that passes through an area 612 is greater than a width threshold (for example, a first width threshold), a pose of the rearview mirror of the vehicle 610 may be kept as the pose 4. In another scenario, the vehicle 610 selects a parking space 613 as a target parking space, and a rearview mirror of the vehicle 610 is unfolded to a pose (for example, a pose 5) suitable for observing a position of an obstacle around the parking space during parking. Because a width of the parking space 613 is greater than a width threshold (for example, a second width threshold), a pose of the rearview mirror of the vehicle 610 may be kept as the pose 5.

During actual implementation of the foregoing two scenarios, when the vehicle 610 travels along the path 611, the pose of the rearview mirror may not be the pose 4. For example, the rearview mirror may be in a folded state. In a process in which the vehicle 610 parks into the parking space 613, the pose of the rearview mirror may not be the pose 5. For example, the rearview mirror may be in a folded state. Therefore, whether the pose of the rearview mirror is normal can be monitored according to the rearview mirror monitoring method provided in this embodiment of this application.

The process in which the vehicle 610 parks into the parking space 613 is used as an example. As shown in FIG. 6(b), if the pose of the rearview mirror of the vehicle 610 is the pose 5, an image captured by an image shooting apparatus disposed at the rearview mirror should have a reference baseline. If a position and a shape of an actual baseline in an image actually captured by the image shooting apparatus disposed at the rearview mirror match those of the reference baseline, it is determined that the pose of the rearview mirror is normal; or if a position or a shape of an actual baseline does not match that of the reference baseline, it is determined that the pose of the rearview mirror is abnormal. For example, if the actual baseline is shown in FIG. 6(b), that is, the reference baseline does not overlap the actual baseline, it is determined that the pose of the rearview mirror is abnormal.

In some implementations, when the pose of the rearview mirror is abnormal (for example, the rearview mirror is in the folded state), the vehicle 610 may indicate, by using a sound-making apparatus such as a speaker, that the pose of the rearview mirror is abnormal and/or indicate to adjust the rearview mirror to the pose 5, and/or the vehicle 610 may indicate, through a GUI of a display apparatus such as a central display screen, that the pose of the rearview mirror is abnormal and/or indicate to adjust the rearview mirror to the pose 5.

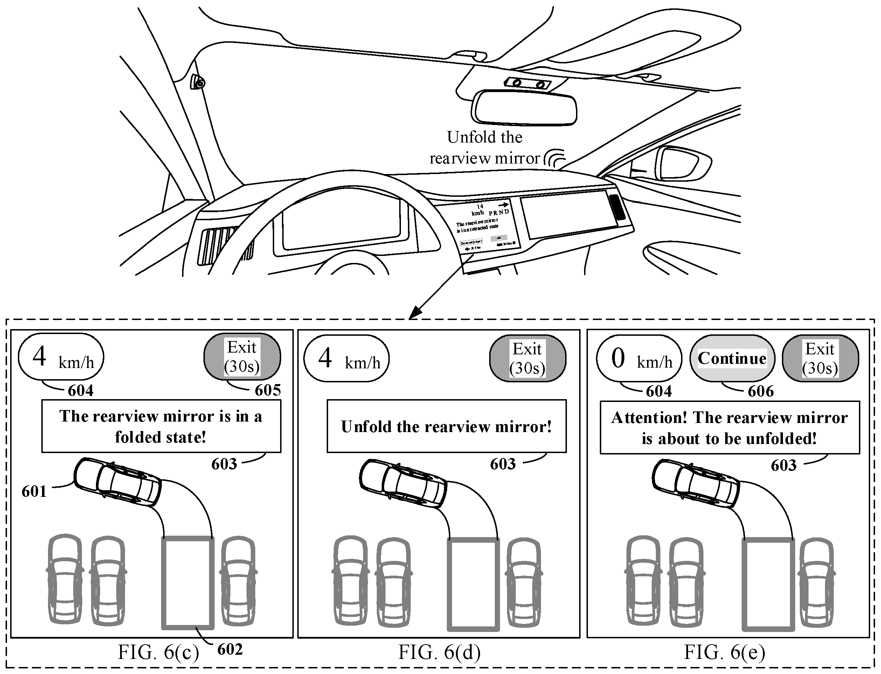

As shown in FIG. 6(c), the GUI may include a parking interface, and the parking interface includes an icon 601 indicating the vehicle 610, an icon 602 indicating the parking space 613, and a prompt dialog box 603. For example, the vehicle 610 may control the prompt dialog box 603 to display "The rearview mirror is in a folded state!" or "The rearview mirror is in an abnormal state!" to indicate that the pose of the rearview mirror is abnormal. For example, the parking interface may further include an icon 604 for displaying a real-time vehicle speed and a parking control button 605. When a user may tap the button 605, the vehicle 610 exits a parking procedure.

In some implementations, as shown in FIG. 6(d), the vehicle 610 may alternatively control the prompt dialog box 603 to display "Unfold the rearview mirror!" to indicate to adjust the rearview mirror to the pose 5.

In some implementations, when the pose of the rearview mirror is abnormal, the vehicle 610 may control the rearview mirror to adjust the pose of the rearview mirror to the pose 5. Before adjusting the pose of the rearview mirror, the vehicle 610 may control the parking interface to display "Attention! The rearview mirror is about to be unfolded!" to indicate to adjust the pose of the rearview mirror.

In some implementations, when the pose of the rearview mirror is abnormal, the vehicle 610 suspends a parking process or stops traveling. As shown in FIG. 6(e), the icon 604 shows that a speed of the vehicle 610 decreases to 0. In addition, the parking interface shown in FIG. 6(e) further includes a parking control button 606. After the vehicle 610 suspends parking, when the user taps the button 606, the vehicle 610 resumes a parking procedure, that is, the vehicle 610 continues to park into the target parking space 613. If the vehicle 610 can automatically adjust the pose of the rearview mirror, before the vehicle 610 suspends parking and adjusts the pose of the rearview mirror, the prompt dialog box 603 on the parking interface may display "Attention! The rearview mirror is about to be unfolded!" to indicate a driver to adjust the pose of the rearview mirror. In addition, when the vehicle 610 suspends parking, the prompt dialog box 603 on the parking interface can further display prompts such as "The rearview mirror is in a folded state!", "The rearview mirror is in an abnormal state!", or "Unfold the rearview mirror!".

In FIG. 6(a) to FIG. 6(e), the vehicle 610 is an example of the vehicle in the method 400, the parking space 613 is an example of the second parking space or the fourth parking space in the method 400, and a part that is of the path 611 and that is located in the area 612 is an example of the second planned path or the fourth planned path. The actual baseline and the reference baseline are an example of the first vehicle body feature and an example of the second vehicle body feature respectively. The pose 5 may be an example of the second pose or the fourth pose in the method 400, or the pose 5 may be an example of the target pose in the method 400.

In some implementations, when the first vehicle body feature and the second vehicle body feature each include a part of a contour line of a vehicle body image, if the first vehicle body feature includes an actual baseline, and the second vehicle body feature includes a reference baseline, the method 400 further includes: determining a folding angle of the rearview mirror based on the first vehicle body feature and the second vehicle body feature; and adjusting the pose of the rearview mirror based on the folding angle.

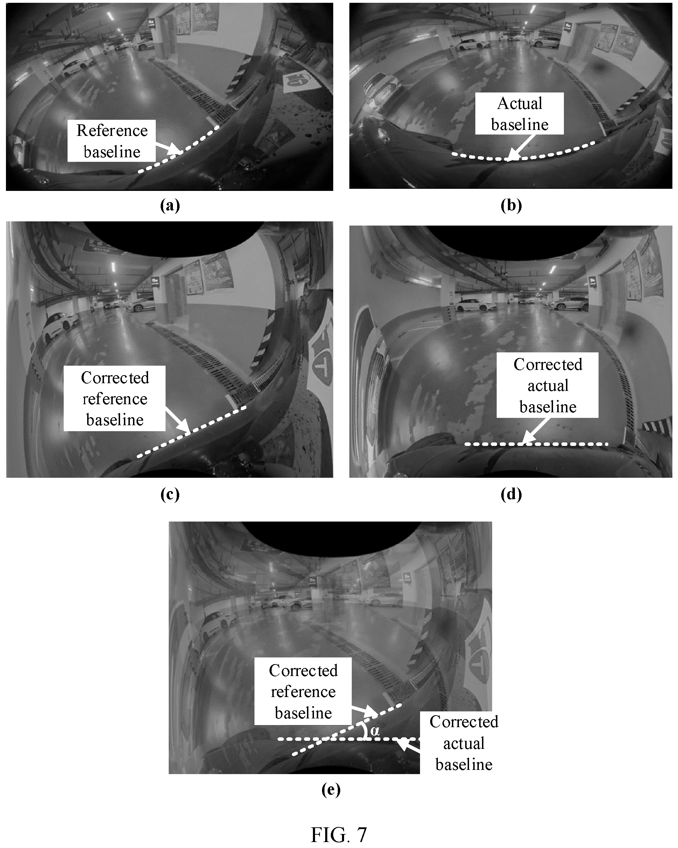

For example, (a) in FIG. 7 shows an image that is captured by the image shooting apparatus disposed at the rearview mirror, when the rearview mirror is in the target pose, where the image includes a reference baseline. (b) in FIG. 7 shows an image captured in real time by the image shooting apparatus disposed at the rearview mirror, where the image includes an actual baseline. Images shown in (c) and (d) in FIG. 7 may be obtained by separately performing de-distortion processing on the images. The images respectively include a corrected reference baseline and a corrected actual baseline (both are straight lines or line segments). As shown in (e) in FIG. 7, an included angle between the corrected reference baseline and the corrected actual baseline is α. In some implementations, if the rearview mirror, when in its target pose, has only a horizontal rotation as opposed to its current pose, the rearview mirror is controlled to rotate by an angle of α toward the vehicle body within a plane parallel to a plane in which four tires of the vehicle are located, to adjust the pose of the rearview mirror to the target pose. In some other implementations, if the rearview mirror, when in its target pose, has a horizontal rotation and a vertical rotation as opposed to its current pose, the image may be further processed to determine, based on the included angle α, a horizontal folding angle α' and a vertical folding angle α" that are of the rearview mirror in the target pose relative to the current pose, and the rearview mirror is controlled to fold horizontally by α' and fold vertically by α", to adjust the pose of the rearview mirror to the target pose, where α is an example of a folding angle.

According to the rearview mirror monitoring method provided in this embodiment of this application, whether the actual pose of the rearview mirror is consistent with the target pose can be determined based on the feature of the image obtained by the image shooting apparatus disposed at the rearview mirror. When the actual pose of the rearview mirror is inconsistent with the target pose, the driver is given a prompt that the pose of the rearview mirror is abnormal, or the pose of the rearview mirror is to be adjusted, or the vehicle is controlled to suspend traveling or parking, to reduce a risk of scraping the vehicle in a moving process, thereby helping ensure personal and property safety of the user and improving driving and riding experience of the user.

In embodiments of this application, unless otherwise stated or there is a logic conflict, terms and/or descriptions in embodiments are consistent and may be mutually referenced, and technical features in different embodiments may be combined into a new embodiment based on an internal logical relationship thereof.

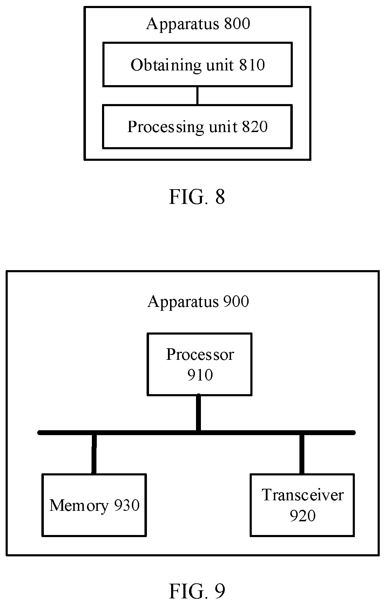

The rearview mirror monitoring method provided in embodiments of this application is described above in detail with reference to FIG. 1 to FIG. 7. A rearview mirror monitoring apparatus provided in embodiments of this application is described below in detail with reference to FIG. 8 and FIG. 9. It should be understood that descriptions of the rearview mirror monitoring apparatus embodiments correspond to descriptions of the method embodiments. Therefore, for content that is not described in detail, refer to the method embodiments. For brevity, details are not described herein again.

FIG. 8 is a block diagram of a rearview mirror monitoring apparatus 800 according to an embodiment of this application. The apparatus 800 may include units configured to perform the method 400. In addition, the units in the apparatus 800 are configured to implement corresponding procedures in embodiments of the method 400.

Specifically, the apparatus 800 includes an obtaining unit 810 and a processing unit 820. The obtaining unit 810 is configured to obtain an image captured by a first image shooting apparatus, where the image indicates a first vehicle body feature on a first side of a vehicle, and the first image shooting apparatus is disposed at a rearview mirror on the first side of the vehicle. The processing unit 820 is configured to determine an actual pose of the rearview mirror based on the first vehicle body feature.

In some implementations, the processing unit 820 is further configured to: when the first vehicle body feature does not match a second vehicle body feature, determine that a pose of the rearview mirror is abnormal, where the second vehicle body feature is a vehicle body feature that is on the first side and that corresponds to a target pose of the rearview mirror, and the target pose is a pose that is of the rearview mirror and that is indicated by a vehicle control instruction, or the target pose is a pose that is of the rearview mirror and that is determined based on one or more of an operating status of the vehicle, a target parking area, and a width of a planned path.

In some implementations, the apparatus further includes an adjustment unit and/or a first prompt unit. The adjustment unit is configured to adjust the pose of the rearview mirror when the pose of the rearview mirror is abnormal. The first prompt unit is configured to: when the pose of the rearview mirror is abnormal, control a prompt apparatus to indicate that the pose of the rearview mirror is abnormal.

In some implementations, the adjustment unit is configured to: adjust the pose of the rearview mirror to a first pose when the vehicle travels toward a first parking space or when a width of a first planned path of the vehicle is less than or equal to a first width threshold, where a width of the first parking space is less than or equal to a second width threshold, and the first planned path is within a first range of the vehicle; or adjust the pose of the rearview mirror to a second pose when the vehicle travels toward a second parking space or when a width of a second planned path of the vehicle is greater than the first width threshold, where a width of the second parking space is greater than the second width threshold, and the second planned path is within a second range of the vehicle, where an overall width that is of the vehicle and that corresponds to the first pose is less than an overall width that is of the vehicle and that corresponds to the second pose.

In some implementations, the processing unit 820 is further configured to: determine a folding angle of the rearview mirror based on the first vehicle body feature and the second vehicle body feature; and the adjustment unit is configured to adjust the pose of the rearview mirror based on the folding angle.

In some implementations, the first prompt unit is further configured to control the prompt apparatus to indicate that the pose of the rearview mirror is to be adjusted.

In some implementations, the apparatus further includes a second prompt unit, configured to: when the pose of the rearview mirror is abnormal and the vehicle travels toward a third parking space, or when the pose of the rearview mirror is abnormal and a width of a third planned path of the vehicle is less than or equal to a third width threshold, control the prompt apparatus to indicate to adjust the rearview mirror to a third pose, where a width of the third parking space is less than or equal to a fourth width threshold, and the third planned path is within a third range of the vehicle; or when the pose of the rearview mirror is abnormal and the vehicle travels toward a fourth parking space, or when the pose of the rearview mirror is abnormal and a width of a fourth planned path of the vehicle is greater than the third width threshold, control the prompt apparatus to indicate to adjust the rearview mirror to a fourth pose, where a width of the fourth parking space is greater than the fourth width threshold, and the fourth planned path is within a fourth range of the vehicle, where an overall width that is of the vehicle and that corresponds to the third pose is less than an overall width that is of the vehicle and that corresponds to the fourth pose.

For example, the first prompt unit and the second prompt unit may be a same unit.

In some implementations, the processing unit 820 is further configured to: when the pose of the rearview mirror is abnormal, control the vehicle to suspend traveling or parking.

In some implementations, the first vehicle body feature indicates any one of the following: a proportion and/or a position of a vehicle body image on the first side in the image; or a position and/or a shape of a part or all of a contour line of a vehicle body image on the first side.

In some implementations, the first vehicle body feature is associated with an extrinsic parameter of the first image shooting apparatus.

For example, the obtaining unit 810 and the processing unit 820 may be disposed in the system shown in FIG. 2. More specifically, the obtaining unit 810 and the processing unit 820 may be disposed in the status determining module 240. In addition, the adjustment unit, the first prompt unit, and the second prompt unit may also be disposed in the system shown in FIG. 2. For example, the adjustment unit may be disposed in the rearview mirror control module 210, and the first prompt unit and the second prompt unit may be disposed in the prompt apparatus or the prompt module. For example, the operations performed by the foregoing units may be performed by one processor, or may be performed by different processors. In a specific implementation process, the one or more processors may be processors disposed in the intelligent driving device 100 shown in FIG. 1, or the apparatus 800 may be a chip disposed in the intelligent driving device 100.

In a specific implementation process, all or some of the units in the foregoing apparatus may be integrated together, or may be implemented independently. In an implementation, the units are integrated and implemented in a form of a system-on-a-chip (system-on-a-chip, SoC).

FIG. 9 is another block diagram of a rearview mirror monitoring apparatus according to an embodiment of this application. The rearview mirror monitoring apparatus 900 shown in FIG. 9 may include a processor 910, a transceiver 920, and a memory 930. The processor 910, the transceiver 920, and the memory 930 are connected through an internal connection path. The memory 930 is configured to store instructions. The processor 910 is configured to execute the instructions stored in the memory 930, to implement the methods in the foregoing embodiments. Optionally, the memory 930 may be coupled to the processor 910 through an interface, or may be integrated together with the processor 910.

It should be noted that the transceiver 920 may include but is not limited to a transceiver apparatus like an input/output interface (input/output interface), to implement communication between the apparatus 900 and another device or a communication network.

The memory 930 may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The transceiver 920 uses a transceiver apparatus, for example, but not limited to, a transceiver, to implement communication between the apparatus 910 and another device or a communication network, to receive/send data/information used to implement the methods in the foregoing embodiments.

An embodiment of this application further provides a computing platform. The computing platform includes the rearview mirror monitoring apparatus 800 or the rearview mirror monitoring apparatus 900 in the foregoing embodiment.

An embodiment of this application further provides an intelligent driving device. The intelligent driving device includes the computing platform in the foregoing embodiment, or the intelligent driving device includes the rearview mirror monitoring apparatus 800 or the rearview mirror monitoring apparatus 900 in the foregoing embodiment.

An embodiment of this application further provides a computer program product. The computer program product includes computer program code. When the computer program code is run on a computer, the computer is caused to implement the methods in the foregoing embodiments of this application.

An embodiment of this application further provides a computer-readable storage medium. The computer-readable medium stores computer instructions. When the computer instructions are run on a computer, the computer is caused to implement the methods in the foregoing embodiments of this application.

An embodiment of this application further provides a chip, including a circuit, configured to perform the methods in the foregoing embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In descriptions of embodiments of this application, unless otherwise specified, "/" means "or". For example, A/B may indicate A or B. In this specification, "and/or" describes only an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In embodiments of this application, prefix words such as "first" and "second" are used only to distinguish different described objects, and do not limit locations, a sequence, priorities, quantities, content, or the like of the described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

In embodiments of this application, unless otherwise stated or there is a logic conflict, terms and/or descriptions in embodiments are consistent and may be mutually referenced, and technical features in different embodiments may be combined into a new embodiment based on an internal logical relationship thereof.

The units described as separate parts may or may not be physically separate, and parts displayed as units may or may not be physical units, may be located in one position, or may be distributed on a plurality of network units. Some or all of the units may be selected based on actual requirements to achieve the purpose of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A rearview mirror monitoring method, comprising:
obtaining an image captured by a first image shooting apparatus, wherein the image indicates a first vehicle body feature on a first side of a vehicle, and the first image shooting apparatus is disposed at a rearview mirror on the first side; and
determining an actual pose of the rearview mirror based on the first vehicle body feature.

2. The method according to claim 1, wherein the method further comprises:
when the first vehicle body feature does not match a second vehicle body feature, determining that a pose of the rearview mirror is abnormal, wherein the second vehicle body feature is a vehicle body feature that is on the first side and that corresponds to a target pose of the rearview mirror, and the target pose is a pose that is of the rearview mirror and that is indicated by a vehicle control instruction, or the target pose is a pose that is of the rearview mirror and that is determined based on one or more of an operating status of the vehicle, a target parking area, and a width of a planned path.

3. The method according to claim 2, wherein the method further comprises:
when the pose of the rearview mirror is abnormal, adjusting the pose of the rearview mirror and/or controlling a prompt apparatus to indicate that the pose of the rearview mirror is abnormal.

4. The method according to claim 3, wherein adjusting the pose of the rearview mirror comprises:
adjusting the pose of the rearview mirror to a first pose when the vehicle travels toward a first parking space or when a width of a first planned path of the vehicle is less than or equal to a first width threshold, wherein a width of the first parking space is less than or equal to a second width threshold, and the first planned path is within a first range of the vehicle; or
adjusting the pose of the rearview mirror to a second pose when the vehicle travels toward a second parking space or when a width of a second planned path of the vehicle is greater than the first width threshold, wherein a width of the second parking space is greater than the second width threshold, and the second planned path is within a second range of the vehicle, wherein
an overall width that is of the vehicle and that corresponds to the first pose is less than an overall width that is of the vehicle and that corresponds to the second pose.

5. The method according to claim 3, wherein the method further comprises:
determining a folding angle of the rearview mirror based on the first vehicle body feature and the second vehicle body feature; and
adjusting the pose of the rearview mirror comprises:
adjusting the pose of the rearview mirror based on the folding angle.

6. The method according to any one of claims 3 to 5, wherein the method further comprises:
controlling the prompt apparatus to indicate that the pose of the rearview mirror is to be adjusted.

7. The method according to claim 2 or 3, wherein when the pose of the rearview mirror is abnormal, the method further comprises:
when the vehicle travels toward a third parking space or when a width of a third planned path of the vehicle is less than or equal to a third width threshold, controlling the prompt apparatus to indicate to adjust the rearview mirror to a third pose, wherein a width of the third parking space is less than or equal to a fourth width threshold, and the third planned path is within a third range of the vehicle; or
when the vehicle travels toward a fourth parking space or when a width of a fourth planned path of the vehicle is greater than the third width threshold, controlling the prompt apparatus to indicate to adjust the rearview mirror to a fourth pose, wherein a width of the fourth parking space is greater than the fourth width threshold, and the fourth planned path is within a fourth range of the vehicle, wherein
an overall width that is of the vehicle and that corresponds to the third pose is less than an overall width that is of the vehicle and that corresponds to the fourth pose.

8. The method according to any one of claims 2 to 7, wherein the method further comprises:
when the pose of the rearview mirror is abnormal, controlling the vehicle to suspend traveling or parking.

9. The method according to any one of claims 1 to 8, wherein the first vehicle body feature indicates any one of the following: a proportion and/or a position of a vehicle body image on the first side in the image; or a position and/or a shape of a part or all of a contour line of a vehicle body image on the first side.

10. The method according to any one of claims 1 to 9, wherein the first vehicle body feature is associated with an extrinsic parameter of the first image shooting apparatus.

11. A rearview mirror monitoring apparatus, comprising:
an obtaining unit, configured to obtain an image captured by a first image shooting apparatus, wherein the image indicates a first vehicle body feature on a first side of a vehicle, and the first image shooting apparatus is disposed at a rearview mirror on the first side; and
a processing unit, configured to determine an actual pose of the rearview mirror based on the first vehicle body feature.

12. The apparatus according to claim 11, wherein the processing unit is further configured to:
when the first vehicle body feature does not match a second vehicle body feature, determine that a pose of the rearview mirror is abnormal, wherein the second vehicle body feature is a vehicle body feature that is on the first side and that corresponds to a target pose of the rearview mirror, and the target pose is a pose that is of the rearview mirror and that is indicated by a vehicle control instruction, or the target pose is a pose that is of the rearview mirror and that is determined based on one or more of an operating status of the vehicle, a target parking area, and a width of a planned path.

13. The apparatus according to claim 12, wherein the apparatus further comprises an adjustment unit and/or a first prompt unit, the adjustment unit is configured to adjust the pose of the rearview mirror when the pose of the rearview mirror is abnormal, and the first prompt unit is configured to: when the pose of the rearview mirror is abnormal, control a prompt apparatus to indicate that the pose of the rearview mirror is abnormal.

14. The apparatus according to claim 13, wherein the adjustment unit is configured to:
adjust the pose of the rearview mirror to a first pose when the vehicle travels toward a first parking space or when a width of a first planned path of the vehicle is less than or equal to a first width threshold, wherein a width of the first parking space is less than or equal to a second width threshold, and the first planned path is within a first range of the vehicle; or
adjust the pose of the rearview mirror to a second pose when the vehicle travels toward a second parking space or when a width of a second planned path of the vehicle is greater than the first width threshold, wherein a width of the second parking space is greater than the second width threshold, and the second planned path is within a second range of the vehicle, wherein
an overall width that is of the vehicle and that corresponds to the first pose is less than an overall width that is of the vehicle and that corresponds to the second pose.

15. The apparatus according to claim 13, wherein the processing unit is further configured to:
determine a folding angle of the rearview mirror based on the first vehicle body feature and the second vehicle body feature; and
the adjustment unit is configured to:
adjust the pose of the rearview mirror based on the folding angle.

16. The apparatus according to any one of claims 13 to 15, wherein the first prompt unit is further configured to:
control the prompt apparatus to indicate that the pose of the rearview mirror is to be adjusted.

17. The apparatus according to claim 12 or 13, wherein the apparatus further comprises a second prompt unit, configured to: when the pose of the rearview mirror is abnormal and the vehicle travels toward a third parking space, or when the pose of the rearview mirror is abnormal and a width of a third planned path of the vehicle is less than or equal to a third width threshold, control the prompt apparatus to indicate to adjust the rearview mirror to a third pose, wherein a width of the third parking space is less than or equal to a fourth width threshold, and the third planned path is within a third range of the vehicle; or
when the pose of the rearview mirror is abnormal and the vehicle travels toward a fourth parking space, or when the pose of the rearview mirror is abnormal and a width of a fourth planned path of the vehicle is greater than the third width threshold, control the prompt apparatus to indicate to adjust the rearview mirror to a fourth pose, wherein a width of the fourth parking space is greater than the fourth width threshold, and the fourth planned path is within a fourth range of the vehicle, wherein
an overall width that is of the vehicle and that corresponds to the third pose is less than an overall width that is of the vehicle and that corresponds to the fourth pose.

18. The apparatus according to any one of claims 12 to 17, wherein the processing unit is further configured to:
when the pose of the rearview mirror is abnormal, control the vehicle to suspend traveling or parking.

19. The apparatus according to any one of claims 11 to 18, wherein the first vehicle body feature indicates any one of the following: a proportion and/or a position of a vehicle body image on the first side in the image; or a position and/or a shape of a part or all of a contour line of a vehicle body image on the first side.

20. The apparatus according to any one of claims 11 to 19, wherein the first vehicle body feature is associated with an extrinsic parameter of the first image shooting apparatus.

21. A rearview mirror monitoring apparatus, comprising:
a memory, configured to store a computer program; and
a processor, configured to execute the computer program stored in the memory, to cause the apparatus to perform the method according to any one of claims 1 to 10.

22. A rearview mirror monitoring system, comprising the apparatus according to any one of claims 11 to 21 and the first image shooting apparatus.

23. An intelligent driving device, wherein the intelligent driving device comprises the apparatus according to any one of claims 11 to 21 or the system according to claim 22.

24. A computer-readable storage medium, wherein the computer-readable storage medium stores instructions, and when the instructions are executed by a processor, the processor is caused to implement the method according to any one of claims 1 to 10.

25. A chip, wherein the chip comprises a circuit, and the circuit is configured to perform the method according to any one of claims 1 to 10.
